# EUROPEAN PATENT SPECIFICATION

(11) **EP 2 579 607 B1**
(45) Date of publication and mention of the grant of the patent: **23.01.2019**
(21) Application number: 12186785.7
(22) Date of filing: 01.10.2012
(51) Int. Cl.: H04N 21/431, H04N 21/482, H04N 21/462

(54) **Search and display techniques for an electronic programming guide**
Such- und Darstellungsverfahren in einer elektronischen Programmzeitschrift
Méthodes de recherche et d'affichage dans un guide électronique programme

(30) Priority: 03.10.2011 US 201113251770
(43) Date of publication of application: 10.04.2013
(73) Proprietor: EchoStar Technologies L.L.C., Englewood, CO 80112 (US)
(72) Inventor: Mountain, Dale, Keighley, Yorkshire BD20 0DQ (GB)
(74) Representative: Sadler, Peter Frederick

(56) References cited:
- WO-A2-02/25937
- WO-A2-02/37840
- US-A1- 2003 028 889
- US-A1- 2008 307 461

## Description

### BACKGROUND

A person watching television may have access to a large selection of television programming. Such television programming may be available across multiple channels and/or formats (e.g., scheduled programming, on-demand programming). An electronic programming guide (EPG) may be used to view current and upcoming television programming.

If a person is interested in viewing television programming related to a particular topic, the user may search the EPG using a search string. For example, the person may provide a search string containing a portion of a title of a television programming. In response, the EPG may provide the person with a listing of current and future available television programs that have a title matching the search string. While such basic searching may provide a person with results that match the search string, a person may desire more detailed and/or user-friendly results.

### SUMMARY

The invention is defined in the claims, to which reference is now directed. Preferred features are set out in the dependent claims.

Various methods, systems, and computer products are disclosed for organizing search results within an electronic programming guide of a television programming device. In some embodiments, a method for organizing search results within an electronic programming guide of a television programming device is presented. The method may include receiving, by the television programming device, a search string, wherein the search string comprises information related to television programming. The method may include searching, by the television programming device, a set of television programming information stored by a storage device local to the television programming device using the search string. The method may include identifying, by the television programming device, a first search result and a second search result, wherein each of the first search result and the second search result comprises a television channel, a time, and a television program. The method may include selecting, by the television programming device, a first colour at least partially based on a first relationship between the search string and the first search result. The method may include selecting, by the television programming device, a second colour at least partially based on a second relationship between the search string and the second search result, wherein the second relationship is different from the first relationship. The method may include presenting, by the television programming device, via a display, the first search result displayed with the first colour and the second search result displayed with the second colour.

Embodiments may include one or more of the following: The method may include prior to receiving the search string, receiving, by the television programming device, the set of television programming information, wherein the set of television programming information comprises information related to multiple television channels, multiple times, and multiple television programs. The method may include prior to receiving the search string, storing, by the television programming device, the set of television programming information using the storage device local to the television programming device. Presenting the first search result with the first colour may comprise using the first colour to highlight the first search result. Presenting the second search result with the second colour may comprise using the second colour to highlight the second search result. The first relationship may be that the search string is present in a title of the first search result. The second relationship may be that the search string is present in a description of the second search result. The method may include determining, at least partially based on the search string, to conduct a search external to the set of television programming information. The method may include transmitting, by the television programming device, the search string to a remote server. The method may include receiving, by the television programming device, search results from the remote server. The search results may comprise information not present in the set of television programming information. At least one of the first search result and the second search result may be from the search results. Receiving, by the television programming device, the set of television programming information may occur via a first communication channel. Receiving, by the television programming device, search results from the remote server may occur via a second communication channel different from the first communication channel. The method may include prior to receiving the search string, receiving, by the television programming device, input linking the first colour to the first relationship. The method may include prior to receiving the search string, receiving, by the television programming device, input linking the second colour to the second relationship. The input may be received from a user of the television programming device. The input may be received from a remote server.

In some embodiments, a computer program comprising instructions is presented. The instructions may be configured to cause a computer to receive a search string, wherein the search string comprises information related to television programming. The instructions may be configured to search a set of television programming information stored by a local storage device using the search string. The instructions may be configured to identify a first search result and a second search result, wherein each of the first search result and the second search result comprises a television channel, a time, and a television program. The instructions may be configured to select a first colour at least partially based on a first relationship between the search string and the first search result. The instructions may be configured to select a second colour at least partially based on a second relationship between the search string and the second search result, wherein the second relationship is different from the first relationship. The instructions may be configured to present, via a display, the first search result displayed with the first colour and the second search result displayed with the second colour within an electronic programming guide.

The computer program, which may be provided on a computer-readable medium, may include instructions configured to, when executed, cause a computer or television programming device to carry out any of the methods described herein. The computer program may further comprise instructions configured to cause the computer to perform one or more of the following functions. Prior to receiving the search string, receive the set of television programming information, wherein the set of television programming information comprises information related to multiple television channels, multiple times, and multiple television programs; and prior to receiving the search string, locally store the set of television programming information using the local storage device. Determine, at least partially based on the search string, to conduct a search external to the set of television programming information; transmit the search string to a remote server; and receive search results from the remote server, wherein: the search results comprise information not present in the set of television programming information; and at least one of the first search result and the second search result is from the search results. Receive the set of television programming information that comprises instructions to receive the set of television programming information via a first communication channel; and receive the search results from the remote server that comprise instructions to receive the search results via a second communication channel different from the first communication channel. Prior to receiving the search string, receive input linking the first colour to the first relationship; and prior to receiving the search string, receive input linking the second colour to the second relationship. The first relationship may be that the search string is present in a title of the first search result; and the second relationship may be that the search string is present in a description of the second search result.

In some embodiments, a television programming device configured to organize search results within an electronic programming guide is presented. The television programming device may include a processor. The television programming device may include a storage device, the storage device configured to store instructions. The instructions may be configured to cause the processor to cause a search string to be received, wherein the search string comprises information related to television programming. The instructions may be configured to cause the processor to search a set of television programming information stored by a local storage device using the search string. The instructions may be configured to cause the processor to identify a first search result and a second search result, wherein each of the first search result and the second search result comprises a television channel, a time, and a television program. The instructions may be configured to cause the processor to select a first colour at least partially based on a first relationship between the search string and the first search result. The instructions may be configured to cause the processor to select a second colour at least partially based on a second relationship between the search string and the second search result, wherein the second relationship is different from the first relationship. The instructions may be configured to cause the processor to generate for display the first search result using the first colour and the second search result using the second colour within the electronic programming guide.

The television programming device may store instructions configured to cause the processor to carry out any of the methods described herein, including the instructions of any of the computer programs described herein. The storage device may further store instructions configured to cause the processor to perform one or more of the following functions. Prior to receiving the search string, cause the set of television programming information to be received, wherein the set of television programming information comprises information related to multiple television channels, multiple times, and multiple television programs; and prior to receiving the search string, locally store the set of television programming information using the local storage device. Determine, at least partially based on the search string, to conduct a search external to the set of television programming information; cause the search string to be transmitted to a remote server; and cause the search results to be received from the remote server, wherein: the search results comprise information not present in the set of television programming information; and at least one of the first search result and the second search result is from the search results. Prior to receiving the search string, cause input linking the first colour to the first relationship to be received; and prior to receiving the search string, cause input linking the second colour to the second relationship to be received. The first relationship may be that the search string is present in a title of the first search result; and the second relationship may be that the search string is present in a description of the second search result.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 illustrates an embodiment of a system configured to organize search results within an electronic programming guide.
FIG. 2 illustrates an embodiment of an end-user display device displaying an electronic programming guide.
FIG. 3 illustrates an embodiment of an end-user display device displaying an electronic programming guide organized using colour.
FIG. 4 illustrates another embodiment of an end-user display device displaying an electronic programming guide organized using colour.
FIG. 5 illustrates an embodiment of a method for organizing search results within an electronic programming guide of a television programming device.
FIG. 6 illustrates an embodiment of a method for organizing search results within an electronic programming guide of a television programming device wherein the search is at least partially conducted using a remote server.
FIG. 7 illustrates an embodiment of a method for organizing search results within an electronic programming guide of a television programming device wherein the colour associated with each type of relationship is selected by an end-user.
FIG. 8 illustrates an embodiment of a computer system.

### DETAILED DESCRIPTION

A person (referred to as an end-user) may provide a search string containing one or more terms to an electronic programming guide (EPG) to search for matching television programming listings. The end-user may be provided with search results accented using various colours. Each of the colours may be used to identify a type of relationship between the search string provided by the end-user and the corresponding search result. The colours may be used to highlight the search results displayed by the EPG to the end-user. As such, when each listing is displayed to the end-user, the end-user can determine a relationship between the search string and the listing based on the accent colour of the listing.

As an example, an end-user may provide a search string that contains a title of a television program to the EPG of a television tuning device. A search of television listing information, which may include a title of a television program, that is stored locally by the television tuner device may be performed using the search string. One or more television program listings may be identified as in some way matching the search string. When the search results are displayed to the end-user, a first colour may be used to accent one or more search results to indicate that the search string provided by the end-user is present within the title of the one or more search results. A second colour may be used to accent one or more search results to indicate that the television program indicated by the search string has one or more actors and/or actresses in common with the search results. A third colour may be used to accent one or more search results to indicate that the one or more search results belong to the same genre as the television program indicated by the search string.

When the results of the search are presented to the end-user, search results having the same relationship to the search string (and that are displayed with the same colour) may be grouped together. As an example, a first group of the search results may indicate that the search string is present within the title of the search results, while a second group of search results may indicate that the search string relates to a television program in the same genre as the search results.

In some embodiments, a search performed based on a search string provided by an end-user is conducted only locally by a television tuner device (e.g., a set top box) that provides an EPG to the end-user. In other embodiments, a search may utilize one or more remote resources. In these embodiments, a search string provided by the end-user may be transmitted to a remote server. The remote server may search one or more databases that contain information related to television programming. These databases may contain more detailed information than is stored locally by the television tuner device (however, in some embodiments, the detailed information may be stored by the television tuner device). For example, the television tuner device may store basic information, such as the title of the television program, the time the television program is slated to be shown, and the channel the television program is scheduled to appear on. The remote server may store additional information such as a listing of the actors and actresses appearing in the television program, the director of the television program, a genre of the television program, and a listing of television programs that are similar (which may have been predetermined by the television service provider). Search results from the remote server may be transmitted to the television tuner device. Each of these search results may be accented by one or more colours and displayed to the end-user via a display device, such as a television.

The colour used to accent a listing based on a relationship between the search string and the listing may be predefined by the end-user. In some embodiments, the end-user may access a configuration mode via the EPG that allows the end-user to select a colour to associate with a type of relationship. As such, the end-user may be able to customize how search results will appear when displayed by the EPG.

While the preceding examples focus on the use of colour to accent search results provided to an end-user via an electronic programming guide, it should be understood that other forms of accenting the search results may be used. In some embodiments, a multi-list structure may be used to provide an end-user with listings of search results according to relationships of the search string to the listings. Thus, each search result list may contain listings that correspond to a type of relationship with the search string. For example, if the end-user provides a search string that is the title of a television program, a first list provided via the EPG may list all upcoming television programs that contain the search string in the title of the listing. A second list provided via the EPG (which may be displayed concurrently with the first list) may list television programs that have one or more actors and/or actresses in common with the television program indicated by the search string. As another embodiment, rather than using colour to accent television listings, the size of the text of each listing may be varied within the search results based on the relationship between the search string and the television listing. As an example of this, a television listing that contains the search string in the title may be displayed using a larger font than a television listing that contains an actor in common with the television listing indicated by the search string.

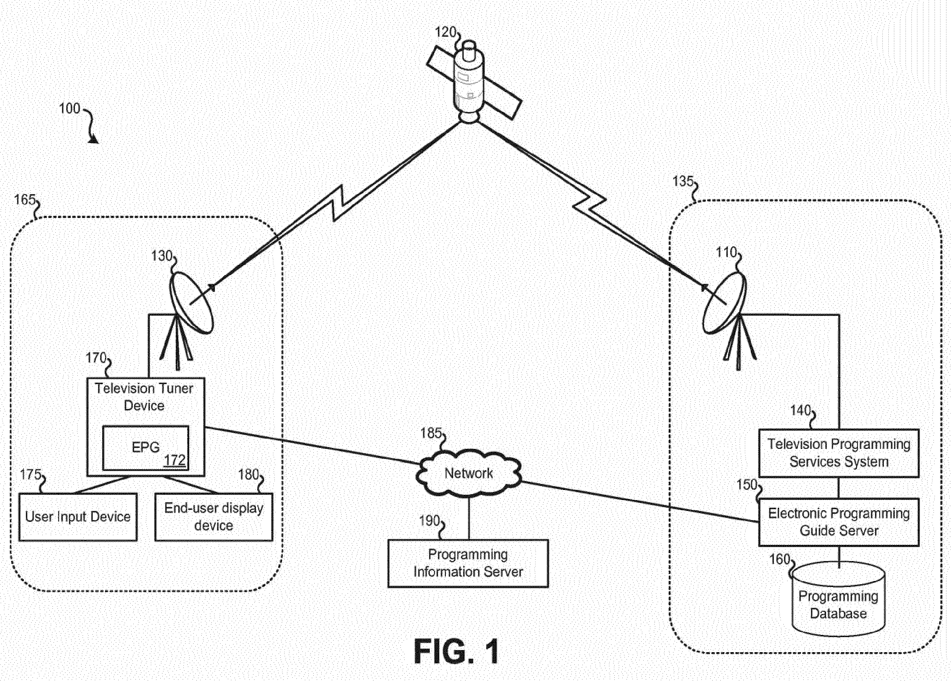

FIG. 1 illustrates an embodiment of a system 100 configured to organize search results within an electronic programming guide. System 100 may include: uplink station 110, television programming services system 140, electronic programming guide server 150, programming database 160, satellite 120, end-user equipment 130, television tuner device 170, user input device 175, end-user display device 180, network 185, and programming information server 190. In some embodiments, more or fewer components may be present.

In some embodiments, a satellite-based television service, such as direct broadcast satellite (DBS) service, is used to deliver television services to end-users. DBS service may involve television channels and/or other content (e.g., on-demand programming) being transmitted via a satellite uplink and multiple downlinks to end-user equipment configured to receive satellite transmissions. As such, a single uplink (or multiple uplinks) may be used to deliver television channels and other content to a large number of end-users. In system 100, only equipment linked to a single set of end-user equipment is illustrated for simplicity. For example, end-user system 165 may contain the components present at an end-user's home or business. It should be understood that system 100 may be used to deliver television channels and other content to many end-users, which may involve many end-user systems similar to end-user system 165.

In system 100, uplink station 110 is configured to transmit one or more television channels and/or other content to satellite 120. Satellite 120 may serve to relay information received from uplink station 110 to a plurality of sets of end-user equipment such as end-user equipment 130. Satellite 120 may be located in geosynchronous orbit to provide continuous service to a particular geographical area.

Television programming services system 140 may represent one or more computer systems that are configured to provide one or more television channels and/or other content to uplink station 110 to be delivered to end-user equipment. Electronic programming guide server 150 may be part of television programming services system 140 or may be separate. Electronic programming guide server 150 may provide television programming information to television tuner device 170.

An EPG 172 may be software and/or firmware executed by the television tuner device. EPG 172 may display programming information for multiple times, multiple channels, and multiple television programs derived from the received television programming information. For example, by an end-user interacting with EPG 172, the end-user may be able to determine at what time a television program is scheduled to appear on a particular television channel. EPG 172 may also allow the end-user to switch between television channels. In addition to listing the time, channel, and name of the television program, additional information may be present for television programs, such as a brief description of the television program, the rating (e.g., G, PG, PG-13, R), and/or the year of release. Such television programming information from the electronic programming guide server 150 may be transmitted for a period of days, such as a week, periodically, such as once per week, via satellite 120.

Electronic programming guide server 150 may communicate with one or more programming databases, such as programming database 160. Programming database 160 may be located locally to electronic programming guide server 150 or may be remotely accessible. Programming database 160 may contain television programming information to be presented to end-users.

Television service provider 135 may own, manage, and/or operate uplink station 110, television programming services system 140, electronic programming guide server 150, and/or programming database 160. In some embodiments, some of these components may be owned and/or operated by entities other than television service provider 135.

End-user equipment 130 may be configured to receive DBS television service. The downlink from satellite 120 to end-user equipment 130 may be unidirectional. As such, while signals may be transmitted from satellite 120 to end-user equipment 130, signals may not be transmitted from end-user equipment 130 to satellite 120. While information may be received by end-user equipment 130 from television service provider 135 via satellite 120, it may not be possible to use the same communication link to transmit information back to television service provider 135. In some embodiments, the satellite communication link may be bidirectional.

End-user equipment 130 may include one or more satellite dishes configured to receive signals from satellite 120. In some embodiments, end-user equipment 130 may include a single satellite dish equipped with multiple tuners. In some embodiments, a single tuner is connected with a satellite dish. In system 100, a single television tuner device, television tuner device 170, is illustrated as connected with end-user equipment 130. It should be understood that in other embodiments end-user equipment 130 may be connected with multiple television tuner devices.

Television tuner device 170 may serve as an interface between the signals received from satellite 120 by end-user equipment 130 and end-user display device 180. Television tuner device 170 may be configured to receive, analyze, and transmit information received from satellite 120 by end-user equipment 130 to end-user display device 180. Additionally, television tuner device 170 may be configured to execute and display (via end-user display device 180) EPG 172 based on television programming information received via satellite 120 by end-user equipment 130 from electronic programming guide server 150. Television tuner device 170 may be a standalone piece of equipment, such as a set-top box. In some embodiments, television tuner device 170 may be incorporated as part of another device, such as a television (or some other form of end-user display device 180). Television tuner device 170 may communicate with multiple other pieces of equipment, such as user input device 175, and end-user display device 180.

End-user display device 180 may be a device that is used to display television channels and/or other televised content to an end-user. Examples of possible end-user display devices include: televisions, computer systems, and mobile devices. User input device 175 may represent controls that are integrated with television tuner device 170. User input device 175 may also be a remote control that allows the user to interact with television tuner device 170. In some embodiments, user input device 175 may permit an end-user to interact with EPG 172 displayed by television tuner device 170 on end-user display device 180.

While television tuner device 170 may receive information via satellite 120 from television service provider 135, this communication link may not allow information to be transmitted from television tuner device 170 back to television service provider 135. As such, another communication link may be used for communication that originates from television tuner device 170. In system 100, television tuner device 170 is in communication with network 185. This connection may represent a broadband connection or a dial-up connection. For example, television tuner device 170 may be configured to communicate via a home Wi-Fi network, a local area network, a cable modem, DSL modem, or any other form of available connection with the Internet. The network 185 may represent one or more public and/or private networks. A public network may be the Internet, and a private network may be a corporate local area network, cable data/television network, DSL network, etc. As such, via a network 185, television tuner device 170 may be able to transmit information to television service provider 135, such as a request for specific television programming information. More specifically, television tuner device 170 may be able to communicate with electronic programming guide server 150.

While in system 100 television programming information is received by television tuner device 170 via satellite 120, it should be understood that in some embodiments television programming information is transmitted to the television tuner device 170 by electronic programming guide server 150 via network 185. As such, the communication link between television tuner device 170 and electronic programming guide server 150 via a network 185 may be used for bidirectional communication. In system 100, television channels and/or other content is delivered to end-users via a direct broadcast satellite arrangement. However, it should be understood that embodiments of this invention may pertain to other forms of televised content delivery. For example, cable television, which utilizes a cable network, may utilize various arrangements for organizing search results within an electronic programming guide as described herein. Similarly a fiber-based television network and/or IP-based television network may utilize various arrangements for organizing search results within an electronic programming guide as described herein.

Television tuner device 170 may also be in communication with one or more programming information servers, such as programming information server 190, via network 185. Programming information server 190 may represent a computer system containing information on television programs and/or other content. For example, programming information server 190 may have additional information about television programs and/or content in addition to (and/or the same as) what is present in the television programming information transmitted to television tuner device 170 by electronic programming guide server 150. For example, programming information server 190 may have information about television programs such as: actors and/or actresses appearing in the television program, production of the television program (such as the director, the producer, the production company), the location of filming, a genre of the television program, television programs that are similar, and recommendations (e.g., if you like television program "x," you may enjoy television program "y"). Similar information may also be stored by electronic programming guide server 150, such as in programming database 160, but may not be transmitted to the television tuner device 170. Such information may be accessible by a television tuner device 170 via network 185 from electronic programming guide server 150 on request. By making such information available on request, the amount of data periodically transmitted to television tuner device 170 by electronic programming guide server 150 as part of the television progarmming information may be decreased.

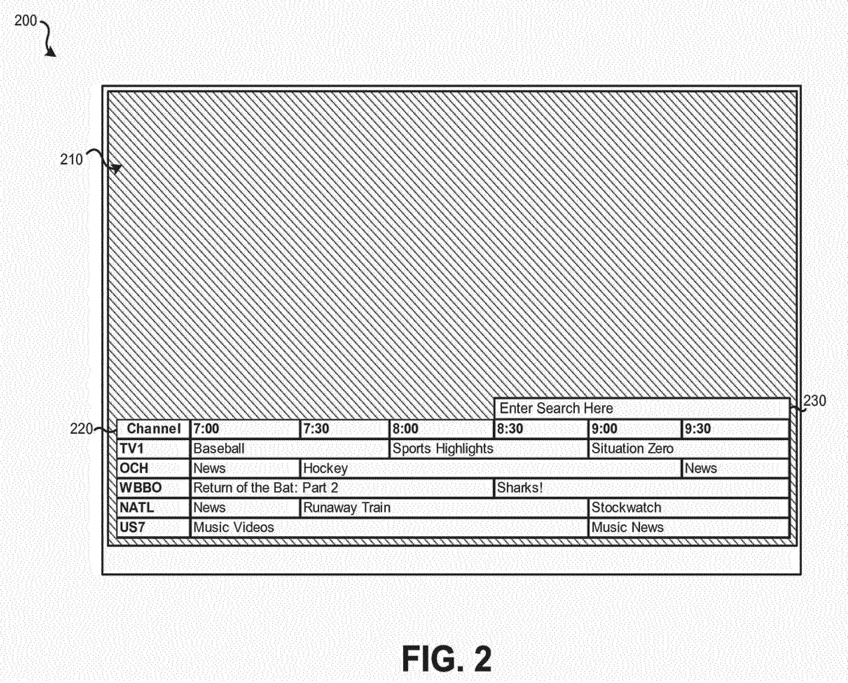

FIG. 2 illustrates an embodiment of an end-user display device 200 displaying an electronic programming guide. End-user display device 200 may represent end-user display device 180 of FIG. 1, or may represent some other form of end-user display device. The EPG of FIG. 2 may be EPG 172 executed by television tuner device 170 of FIG. 1. Some other form of television tuner device may also create the EPG 220 of FIG. 2. End-user display device 200 may be a television. Region 210 may represent the display area of end-user display device 200 where television programming and/or other content is displayed. When activated, EPG 220 may be displayed over a portion of region 210. In some embodiments, when EPG 220 is displayed, no television programming and/or other content is concurrently displayed.

EPG 220 displays television programming information for multiple channels over a period of time. In the illustrated embodiment of FIG. 2, television programming information for five channels is concurrently displayed. This is for example purposes only. More or fewer channels may be displayed concurrently. Further, an end-user may have the ability to select other channels for display. As an example, an end-user may have the ability to scroll up or down to display other channels within EPG 220. Further, EPG 220 displays a period of time from 7 PM until 10 PM. EPG 220 may contain information for other periods of time, which the end-user may select for display. For example, the end-user may be permitted to scroll left and right to display television programming scheduled to be shown earlier or later, respectively.

While the illustrated embodiment of EPG 220 displays television programming that is scheduled to be televised on a particular channel at a particular time, it should be understood that EPG 220 may be used to display other forms of content. For example, EPG 220 may be used to present an end-user with various forms of on-demand content for selection and display. Such content may be available at any time selected by a user.

EPG 220 may include search function 230. Search function 230 may permit an end-user to search through the television programming information stored by EPG 220. While five television channels are present in EPG 220, it should be understood that a much larger number of channels may be available; for example, 100, 200, or 300 channels may be available to an end-user. As such, a significant amount of television programming information may be available via EPG 220. Thus, search function 230 may permit an end-user to locate particular information within the extensive available television programming information by searching for particular text. An end-user selecting search function 230 may be presented with some form of text entry, such as an on-screen keyboard, that permits an end-user to provide a search string. The search string may be used to search television programming information of EPG 220.

It should be understood that EPG 220 represents an exemplary embodiment of an EPG with a search function. Other embodiments of EPGs and search functions may display less or greater amounts of information and/or may be presented on-screen to an end-user in a different format.

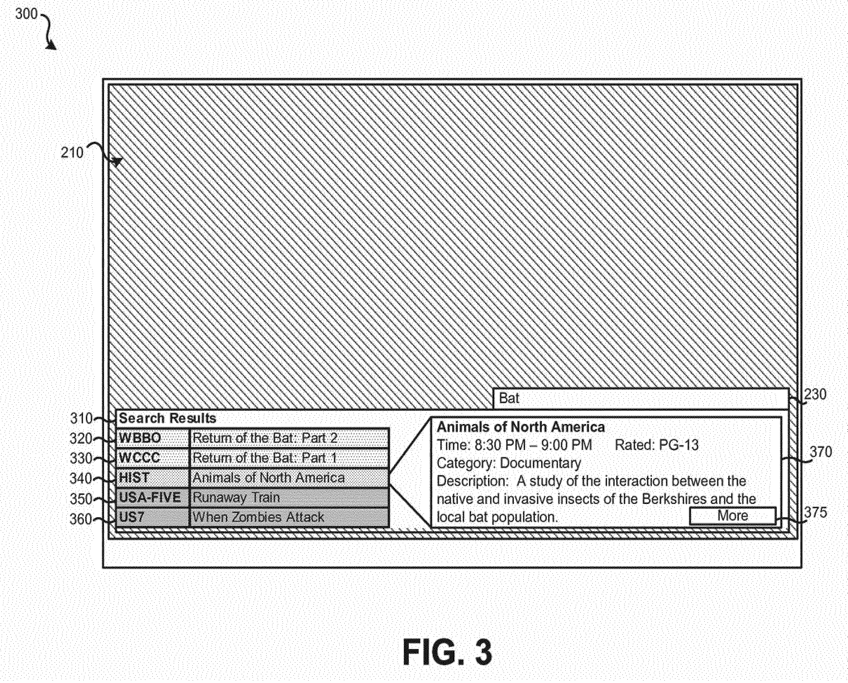

FIG. 3 illustrates an embodiment of an end-user display device 300 displaying an electronic programming guide organized using colour. End-user display device 300 may represent end-user display device 200 of FIG. 2. End-user display device 180 of FIG. 1, and/or some other form of end-user display device. The EPG of FIG. 3 may be the same EPG as in FIG. 2. and/or may be EPG 172 executed by television tuner device 170 of FIG. 1. Some other form of television tuner device may also execute the EPG of FIG. 3.

To produce the search results of FIG. 3, a search may be conducted locally by a television tuner device and/or may involve a search being conducted remotely by one or more computer systems, such as an electronic programming guide server, and/or a programming information server, such as those illustrated in FIG. 1. In the illustrated embodiment of FIG. 3, an end-user has input a search string of "Bat" into search function 230. Based on this search string, the television programming information of EPG 220 may be searched for information that matches the search string of "bat." The search results found within the television programming information may be presented to the end-user using multiple colours to identify the relationship the search string provided by the end-user and the search result of a television program (or other content).

In the illustrated embodiment, search result display 310 contains five results for television programming information that contains the search string "bat": search result 320, search result 330, search result 340, search result 350, and search result 360. Each of these search results may be accented by a colour that represents the relationship between the search string and the search result. In the illustrated embodiment, the search results are highlighted using the colour that represents the relationship between the search string and the search result. In other embodiments, rather than highlighting the result, the search results may be accented using some other format. For example, the results could be outlined in the colour, have the text of the search result appear in the colour, be linked with variable icons that may display colour, or periodically flash the colour. Other embodiments using the colours may also be possible.

In the illustrated embodiment of FIG. 3, the colour associated with the relationship between the search string and the search result is used to highlight the television program that is the search result and the television channel that the television program is scheduled to appear on. The search conducted using the search string provided by the end-user via search function 230 may be used to conduct a local search at a television tuner device. Alternatively, the search may involve querying an electronic programming guide server and/or a programming information server. Search result 320 and search result 330 may be highlighted using a first colour (represented in FIG. 3 using a first level of shading). In this case, the first colour may be selected because the search string appears in the title of search result 320 and search result 330. Thus, a first colour may be used whenever the search string appears in the title of a television program. As searching for words found in programming titles may represent a likely search strategy of end-users, search results, such as search result 320 and search result 330 that contain the search string in the title, may be highlighted using a prominent colour (e.g., a bright shade of colour such as bright blue, bright red, or bright green). Further, these search results may be grouped together and/or may appear at the top of a list of search results.

A different relationship exists between search result 340 and the search string entered by the end-user in search function 230. "Bat" is not present in the title of the television program of search result 340. However, as can be implied from the title of the television program of search result 340 ("Animals of North America"), the television program may bear some relation to the search string. In this example, a description of the television program of search result 340 may explicitly reference the search string. In this or other embodiments, "bat" may appear in a listing of keywords associated with the television program; these keywords may or may not be displayed to the end-user. In some embodiments, a lookup in a database of words associated with words in the television program title or description may be performed. For example, based on the word "animals" in the title, words such as: dogs, cats, horses, bats, etc. may be identified as related. A different colour may be used to highlight search result 340 (represented by different shading in FIG. 3). In some embodiments, because it may be considered less likely that a television program having "bat" in the description or as a keyword is being searched for instead of a television program having "bat" in the title, search result 340 may be listed less prominently (e.g., lower) in search results 310. The colour used to highlight search result 340 may also reflect that it is less likely that search result 340 is what the end-user is searching for. As such, rather than using bright green, bright blue, or bright red, a darker shade of a colour may be used. In some embodiments, the same colour as search result 320 and search result 330 may be used, but the brightness of the colour may be lowered. For example, if bright green is used for search result 320, a darker shade of green may be used for search result 340. Alternatively, in some embodiments, a completely different colour may be used. For example, if bright blue is used for search result 320 and search result 330, green or red or some other colour may be used for search result 340.

Relating to search result 340, description 370 is displayed. Description 370 may be displayed because the end-user has selected search result 340. In some embodiments, the description 370 may be displayed because the search string provided via search function 230 is found within the description of search result 340. This may occur by default, otherwise it may not be readily apparent why a particular search result was returned. Description 370 may provide various information about the television program on search result 340. For example, information such as the name of the television program, the time the television program is slated to appear, the rating of the television program, the category of the television program, and a brief description of the television program may be displayed. Less or more information may be displayed in other embodiments. The end-user may be permitted to acquire more information than is present in description 370. The information presented in description 370 may be information that is stored locally by a television tuner device. However, if additional information is desired by the end-user, the information may be retrieved from one or more remote computer systems (such as an electronic programming guide server and a programming information server). In the illustrated embodiment, by an end-user selecting "More" button 375, additional information regarding search result 340 may be retrieved from a remote computer system. For example, information on the cast and/or crew of the television program, the titles of similar television programs, the year of production, and/or some other form of information may be retrieved regarding search result 340.

Search result 350 and search result 360 may represent search results having a third type of relationship with the search string provided by the end-user. "Bat" may not be present in the title of the television programs of search result 350 and search result 360, and may also not be present in the description of the television programs of search result 350 and search result 360. Rather, the director of the television program of search result 350 and of search result 360 may have "bat" in his name (e.g., "James Batlow"). This may represent a third type of relationship: the search string provided by the end-user appearing in a listing of the cast and/or crew of the television program of the search result. Because this is a different form of relationship, a different colour may be used for search result 350 and search result 360 (represented by different shading from the other results of FIG. 3). Possibly because it is less likely that the end-user is searching for a television program based on cast and/or crew, the colour used to highlight search result 350 and search result 360 may be less prominent than the colours used for search result 320, search result 330, and search result 340. For example, a darker shade of the same colour may be used for search result 350 and search result 360 as the previous search results, or a different colour altogether may be used. For example, a shade of gray or a shade of brown may be used to illustrate to the end-user that a relationship exists between search result 350, search result 360, and the search string provided by the end-user, but that the relationship is less likely to represent a result that the end-user is attempting to search for. Further, because it may be less likely that the end-user is attempting to search for a member of cast and/or crew, search result 350 and search result 360 may be listed below search result 320, search result 330, and search result 340.

The above ordering of search results, and the selection of colour used to highlight such search results may vary by embodiment. For example, search results where the search string appears in a listing of cast and/or crew may be considered more likely to represent a search result that the end-user is attempting to search for. As such, search result 350 and search result 360 may be listed above one or more of the remaining search results, such as search result 340. Such prioritization of how search results 310 are provided to the end-user may be predefined by the television service provider and/or may be configured by the end-user via a configuration mode.

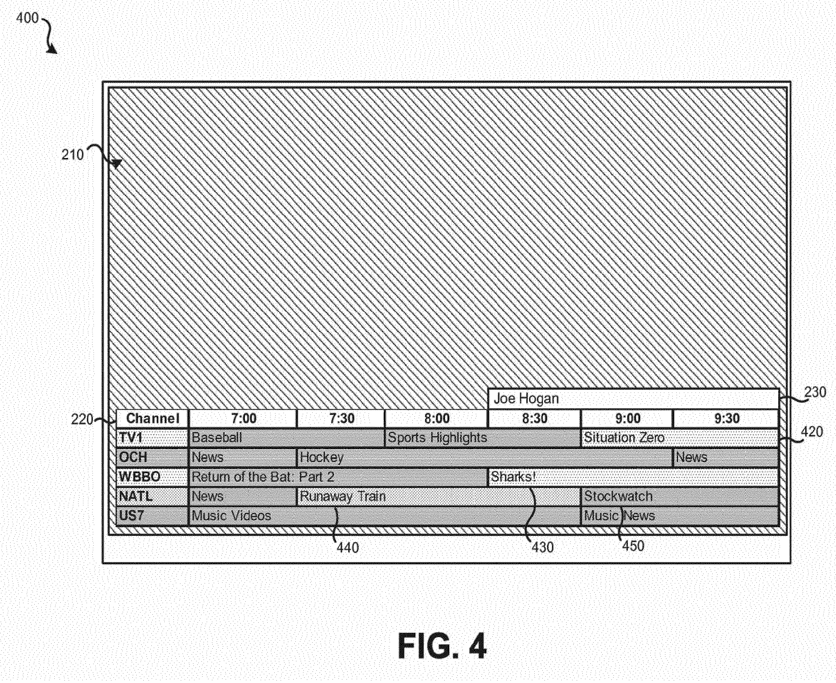

FIG. 4 illustrates another embodiment of an end-user display device 400 displaying an electronic programming guide organized using colour. End-user display device 400 may represent end-user display device 180 of FIG. 1, or may represent some other form of end-user display device. The EPG of FIG. 4 may be EPG 172 executed by television tuner device 170 of FIG. 1, the EPG of FIG. 4, or some other television tuner device. In the illustrated embodiment of FIG. 4, television programming information regarding television programming that does not match the search string provided by the end-user remains displayed, rather than only the search results being displayed as in FIG. 3. To produce the search results of FIG. 4, a search may be conducted locally by a television tuner device and/or may involve a search being conducted remotely by one or more computer systems, such as an electronic programming guide server and/or a programming information server, such as those illustrated in FIG. 1.

Using search function 230, an end-user has provided the search string of "Joe Hogan." The search string is used to search television programming information of EPG 220. Rather than providing a search result display, such as in FIG. 3, television programs listed within EPG 220 are accented using various colours to illustrate a relationship between the search string and the television program being accented. In FIG. 4, accenting the television programs using colour is performed by highlighting entries within EPG 220 using the accent colour. As discussed previously, besides highlighting, other ways of using colour to accent listings within an EPG may be possible.

Search result 420 and search result 430 may be highlighted using a first colour (represented by a first level of shading in FIG. 4) based on a relationship between search result 420, search result 430, and the search string. In the illustrated embodiment, "Joe Hogan" is an actor appearing in the television programs of search result 420 and search result 430.

The search result 440 may be highlighted using a different colour (represented by a different level of shading in FIG. 4). This different colour represents a different relationship between search result 440 at the search string of "Joe Hogan." As an example, the relationship may be that while the television program of search result 440 does not feature "Joe Hogan" as a member of cast or crew, television watchers who enjoy television programs having "Joe Hogan" as an actor may be likely to also enjoy the television program of the search result. As such, by an end-user searching for an actor he likes, the end-user may be introduced to other television programs the end-user may also enjoy.

It may be assumed more likely that an end-user is searching for a television program that actually features the actor named by the search string, and therefore search result 420 and search result 430 may be displayed using a brighter colour than search result 440. For example, search result 420 and search result 430 may be displayed using a bright colour, such as bright red, bright blue, or bright green. Search result 440 may be displayed using a darker shade of the same colour as search result 420 and search result 430 or may be displayed using a different colour. Whether the same colour or a different colour, search result 440 may be displayed in a darker shade such as to be less prominent and to provide the end-user a visual indication that search result 440 is less relevant to the search string provided by the user.

In the embodiment of FIG. 4, television programs that are not determined to relate to the search string remain displayed. For example, television listing 450 has not been determined to have any relationship with the search string provided by the end-user. Such listings may be highlighted using a colour that indicates the lack of relationship with the search string. For example, a dark shade of gray or brown may be used. In other embodiments, no shading and/or colouring may be applied to non-search related results. Such a colour may permit the television listings that are unrelated to the search string to still be read by the end-user but to be visually indicated as unrelated to the search string. As such, an end-user may be permitted to browse all the television listings available using EPG 220 while being able to identify the search results related to the search string.

In the illustrated embodiment of FIG. 4, the names of television channels that contain a search result related to the search string provided by the end-user are highlighted using the same colour as the most significant corresponding search result. As such, an end-user may be able to scan down a listing of channels to identify channels that are related to the search string provided by the end-user. In other embodiments, the listing of channels may differ.

In FIG. 3 and FIG. 4, exemplary search strings are used to identify search results that are highlighted using various colours according to the relationship between each search result and the search string. It should be understood that the search strings used in these figures are for example purposes only, and do not limit the scope of what can be searched for by an end-user. For example, it may be possible for an end-user to search for any alphanumeric string. Further, the various names of the channels, the times, the names of the television programs, and/or the display format of the EPG are for example purposes only and do not limit the scope of the various embodiments.

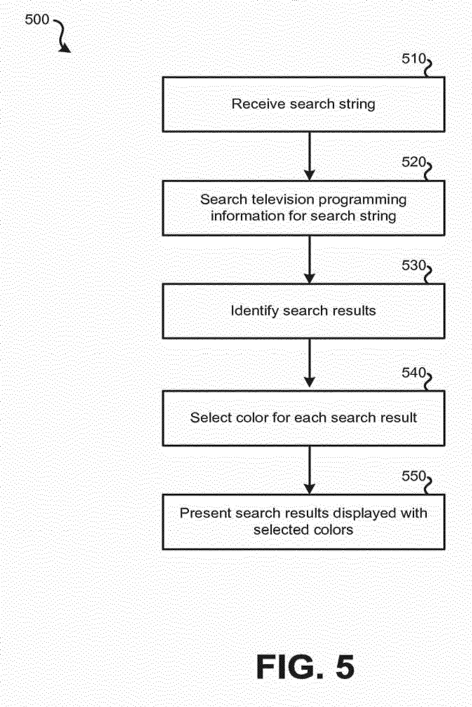

In order to produce search results similar to the search results provided in FIG. 3 and FIG. 4, one or more methods may be performed. Such methods may be performed by a system configured to organize search results within an electronic programming guide, such as system 100 of FIG. 1. Additional and/or other systems may also be used to perform the various methods described. FIG. 5 illustrates an embodiment of a method 500 for organizing search results within an electronic programming guide of a television programming device. Method 500 may be performed by system 100 of FIG. 1, or by some other system for organizing search results within an electronic programming guide.

At step 510, a search string may be received. The search string may be received by an EPG that is being executed by a television tuner device. For example, referring to system 100 of FIG. 1, EPG 172 executed by television tuner device 170 may receive a search string from an end-user via user input device 175. The search string may be a string containing one or more alphanumeric characters that the end-user desires to search for in the television programming information available to the end-user via an EPG. The search string may be entered by the user via an input device such as a remote control or keyboard. An input device, such as a remote control, may be used in conjunction with a on-screen input device, such as an on-screen keyboard.

At step 520, television programming information may be searched for the search string. The television programming information may be stored locally by the television tuner device that is executing the EPG. As such, the search may be conducted locally and may not require any communication with a remote server, such as a programming information server or an electronic programming guide server. Performing the search may involve comparing the search string received at step 510 with available the television programming information, including the titles of television programs, the description of television programs, and/or a listing of cast and/or crew. In some embodiments, the end-user may be able to limit the search performed at step 520. For example, the user may limit the search to only television programming information relevant to the current day, or to television programming information related to currently playing television programs. Other forms of restriction of the scope of the search may be available to the end-user, including limitations on time, channels, content age rating, etc.

At step 530, search results may be identified. These search results may be identified by the television tuner device that is executing the EPG. Identifying the search results may involve identifying zero, one, or more than one search result that is in some way related to the search string received at step 510. If no search results are identified, method 500 may end. If one or more search results are identified, method 500 may proceed to step 540.

At step 540, a colour may be selected for each search result. The colour selected for each search result may be based on the relationship between the search string and the corresponding search result. Each type of relationship may be associated with a different colour. In some embodiments, multiple relationships may be associated with the same colour. By way of example only, Table 1 lists various exemplary relationships and associated colours.

**Table 1**

| **Relationship to Search String** | **Accent Colour** |
|---|---|
| In Title | Bright Blue |
| In Description | Dark Blue |
| Actor/Actress | Bright Green |
| Crew | Dark Green |
| Similar to | Orange |
| Same genre | Yellow |
| Recommended | Red |

Referring to Table 1 as an example, if the search string provided by the end-user is present in a television program's title, the accent colour used may be bright blue. As another example, if the search string provided by the end-user is (part of) the name of a person appearing in the crew of the television program, the accent colour used for the program may be dark green. As yet another example, if the search string provided by the end-user is part of a television program's title, a television program that is similar to this television program indicated by the search string may be accented by the colour orange.

It should be understood that Table 1 is for example purposes only. Fewer or more relationships may be associated with various colours. Further, fewer or greater numbers of colours may be used to accent various relationships. Which relationships are used and/or which colours are associated with which relationships may be defined by a television service provider, such as television service provider 135 of system 100. In these or other embodiments, an end-user may be permitted to customize which relationships are used and/or which colours are associated with which relationships. For example, in a customization screen, an end-user may be presented with various relationships which an end-user may be permitted to check off as included in search results. The end-user may also be provided with a visual representation of a colour wheel (or some similar colour selection device) to allow the end-user to select a colour to associate with a particular type of relationship.

At step 550, some or all of the search results identified at step 530 may be displayed to the end-user. Step 550 may include outputting the some or all of the search results for display to a display device, such as a television. Each of these search results may be accented by a particular colour that was selected for the search result at step 540. In some embodiments, accenting each search result with a particular colour involves highlighting the search results with the particular colour, such as in FIG. 3. In such embodiments, only television programs and/or other content that has a relationship with the search string are presented to the end-user. In other embodiments, such as in the EPG of FIG. 4, these search results may be accented with a particular colour among television programs that do not have a relationship with the search string provided by the end-user. Presentation of the search results using the accent colours may occur via an end-user display device, such as a television. Referring to system 100 of FIG. 1, end-user display device 180 may be used to display the search results produced by EPG 172 being executed by television tuner device 170. Following these search results being displayed with the accented colours at step 550, the end-user may be permitted to view television programming information related to the search results and/or view the television programming associated with the search results, by selecting the desired programming from the search results.

At step 550, in addition to presenting these search results accented with the selected colours to the end-user, the search results may be grouped according to the relationships used to select colours at step 540. As such, each search result that has the same relationship with the search string may be grouped together and displayed together to the end-user. Further, based on the relationship between the search results and the search string, an ordering in which the search results are to be presented to the end-user may be determined. For example, if a search string is present in the title of a search result, such a search result may be more prominently displayed than merely recommended television programs associated with the search string.

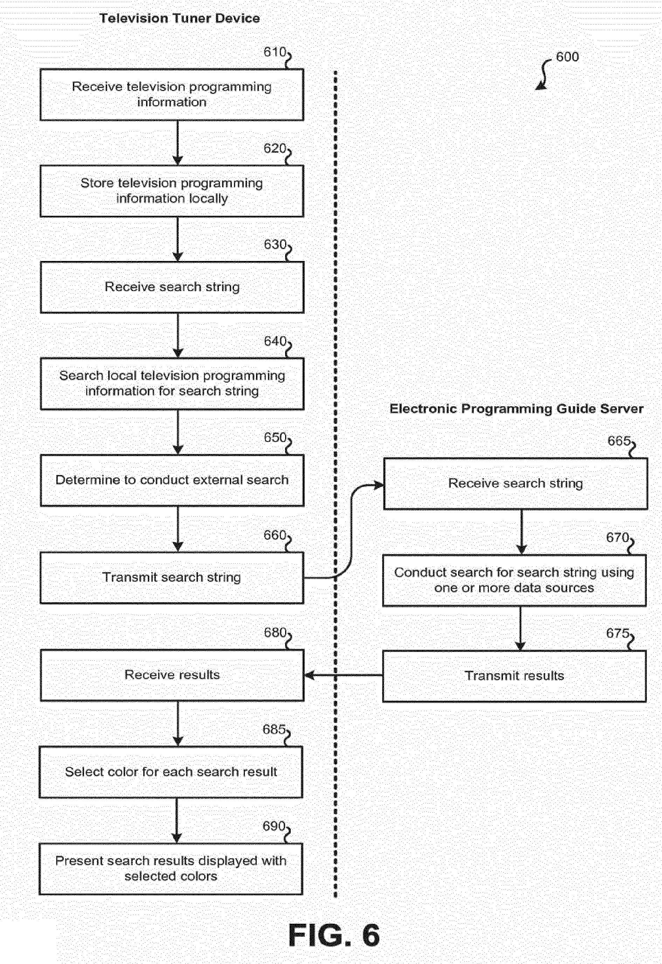

FIG. 6 illustrates an embodiment of a method for organizing search results within an electronic programming guide of a television programming device wherein the search is at least partially conducted using a remote server. Method 600 may be performed by system 100 of FIG. 1, or by some other system for organizing search results within an electronic programming guide.

At step 610, television programming information may be received by a television tuner device. Such television programming information may be received from an electronic programming guide server of a television service provider. This television programming information may be received and stored locally by a television tuner device. Referring to system 100, electronic programming guide server 150 may transmit television programming information to television tuner device 170. This television programming information may be transmitted via satellite 120. In some embodiments, the television programming information may be transmitted to television tuner device 170 via network 185. The television programming information may contain information regarding multiple television programs appearing on multiple television channels at multiple times. The television programming information may also relate to other forms of content, such as on-demand programming. The information regarding multiple television programs of the television program information may include: names of television programs, descriptions of television programs, listings of actors and/or actresses appearing in television programs, listings of crew for television programs, the year the television programs were produced, etc. The contents of the television programming information received by a television tuner device may be selected by a television service provider. The television programming information may be received periodically. For example, television programming information may contain television programming information for a time period of one week. This television programming information may be received weekly by a television tuner device. An end-user may access some or all of this television programming information via an EPG executed by a television tuner device. At step 620, received television programming information may be stored locally by the television tuner device.

At step 630, a search string may be received from an end-user. The search string may be received by the EPG that is being executed by a television tuner device. The search string may be a string containing one or more alphanumeric characters that the end-user desires to search for in the television programming information available via the EPG. The search string may be entered by the user via an input device such as a remote control or keyboard. An input device, such as a remote control, may be used in conjunction with an on-screen input device, such as an on-screen keyboard.

At step 640, television programming information may be searched for the search string. The television programming information may be stored locally by the television tuner device that is executing the EPG. As such, the search may be conducted locally and may not require any communication with a remote server, such as a programming information server or an electronic programming guide server. Performing the search may involve the television programming information, including the titles of television programs, the description of television programs, and/or a listing of cast and/or crew being searched for the search string received at step 620. In some embodiments, the end-user may be able to limit the search performed at step 640. For example, the user may limit the search to only television programming information relevant to the current day, or to television programming information related to currently playing television programs. Other forms of restriction of the search may be available to the end-user.

At step 650, it may be determined to conduct an external search using the search string received at step 630. The determination to conduct the external search may be performed by the television tuner device executing the EPG. Various predefined conditions may be used to determine whether an external search is to be conducted. For example, an external search may be automatically conducted if a predetermined number of search results are not identified locally. For example, if no search results are found, an external search may be necessary. In some embodiments, the end-user may be presented with the opportunity to select whether an external search is to be conducted or not. The end-user may avoid conducting an external search because it takes more time. Alternatively, an end-user may desire an external search because a greater amount of television programming information may be available to be searched. At step 660, assuming the external search is to be conducted, the search string received at step 630 is transmitted to an external server. In the illustrated embodiment of method 600, the external server used is an electronic programming guide server.

While television programming information may have been received by television tuner device 170 via satellite 120, the external search may be conducted using a different communication link. For example, the search string may be transmitted to programming information server 190 via network 185. In other embodiments, the search string may alternatively or additionally be transmitted to electronic programming guide server 150. While electronic programming guide server 150 may have initially transmitted television programming information to television tuner device 170, additional television programming information not transmitted to television tuner device 170 may be available at electronic programming guide server 150.

At step 665 of method 600, the search string is received by the electronic programming guide server. A search may be conducted using the search string by the electronic programming guide server at step 670. This may involve searching one or more data sources, such as television programming databases. The television programming information available at the electronic programming guide server may be more extensive than the television programming information stored locally by the television tuner device. By way of example only, the television tuner device may not store a listing of actors and/or actresses appearing in television programs. However a search using the electronic programming guide server may permit the actors and/or actresses appearing in television programs to be searched. As another example of a search which may not be successful using only a local search conducted by the television tuner device, an end-user may search for a search string such as "Emmy award winner." While no results may be returned by the television tuner device locally, the same search conducted by the electronic programming guide server may have access to television programming information that indicates which television programs listed via the EPG to the end-user are Emmy award winners. At step 675, the search results of the search conducted by the electronic programming guide server may be transmitted to the television tuner device. Each of the transmitted search results may indicate the relationship between the search results and the search string received at step 665.

At step 680, the search results may be received by the television tuner device. At step 685, a colour may be selected for each search result received from the electronic programming guide server. The colour selected for each search result may be based on the relationship between the search string and the corresponding search result. Each type of relationship may be associated with a different colour. In some embodiments, multiple relationships may be associated with the same colour. By way of example, previously discussed Table 1 lists various exemplary relationships and associated colours. Further, at step 685, if one or more results were located during the search of the local television programming information at step 640, a colour may be selected for each of these search results also.

At step 690, some or all of the search results received at step 680 and/or identified from the search of the local television programming information at step 640 may be displayed to the end-user. Step 690 may include outputting the search results for display to a display device, such as a television. Each of these search results may be accented by a particular colour that was selected for the search result at step 685. In some embodiments, accenting each search result with a particular colour involves highlighting the search results with the particular colour, such as in FIG. 3. In such embodiments, only television programs and/or other content that have a relationship with the search string is presented to the end-user. In other embodiments, such as in the EPG of FIG. 4, these search results may be accented with a particular colour among television programs that do not have a relationship with the search string provided by the end-user. Presentation of the search results using the accent colours may occur via an end-user display device, such as a television. Referring to system 100 of FIG. 1, end-user display device 180 may be used to display the search results produced by EPG 172 being executed by television tuner device 170. Following these search results being displayed with the accented colours at step 690, the end-user may be permitted to view television programming information related to the search results and/or view the television programming associated with the search results.

Step 690, in addition to presenting these search results accented with the selected colours to the end-user, may involve grouping these search results according to the relationships used to select colours at step 685. As such, each search result that has the same relationship with the search string may be grouped together and displayed together to the end-user. Further, based on the relationship between the search results in the search string, ordering in which the search results are to be presented to the end-user may be determined. For example, if a search string is present in the title of a search result, such a search result may be listed ahead of recommended television programs based on the search string.

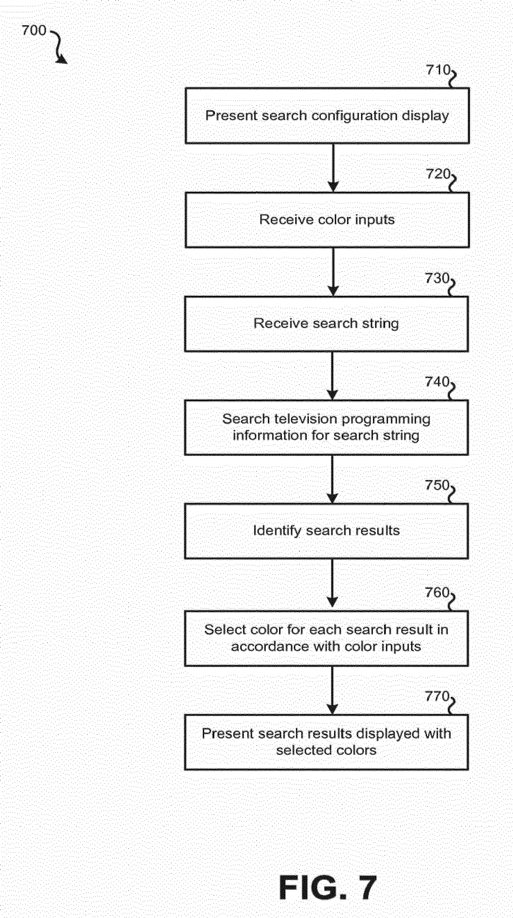

FIG. 7 illustrates an embodiment of a method 700 for organizing search results within an electronic programming guide of a television programming device wherein the colour associated with each type of relationship is selected by an end-user. Method 700 may be performed within system 100 of FIG. 1, or by any other system for organizing search results within an electronic programming guide. At step 710, a search configuration display may be presented to an end-user. Such a search configuration display may be presented to the end-user by an EPG being executed by a television tuner device. The end-user may have provided input that indicates the end-user desires to enter a configuration mode.

The configuration display may permit the end-user to configure how search results are presented to the end-user. Within the configuration display, the end-user may be permitted to indicate: 1) which types of relationships are considered for matches with a search string provided by the end-user; and 2) what colours are used for accenting search results to indicate the relationship between the search result and the search string. In some embodiments, the end-user may be permitted to indicate how the colour is used to accent the search result, such as by highlighting the search result, underlining the search result, or colouring an icon associated with the search result. In some embodiments, the end-user may be permitted to select a different way of sorting search results that uses a display device other than multiple colours, such as shading, font size, outlining, etc.

At step 720, the end-user may indicate the colours to be used for accenting search results to indicate the relationships between search results and search strings. In some embodiments, the same colour may be used for more than one type of relationship. In some embodiments, different shades of the same colour may be used for different relationships. In some embodiments, a different colour may be used for each type of relationship. The end-user may be presented with a colour wheel to select the colour to be used for each type of relationship. Indications of the colours selected by the end-user may be stored by the television tuner device executing the EPG.

At step 730, a search string may be received. The search string may be received after the end-user has specified the colours to be used for accenting the search results. The search string may be received by an EPG that is being executed by the television tuner device. The search string may be a string containing one or more alphanumeric characters that the end-user desires to search for in the television programming information available to the end-user via an EPG. The search string may be entered by the end-user via an input device such as a remote control or keyboard. An input device, such as a remote control, may be used in conjunction with a on-screen input device, such as an on-screen keyboard.

At step 740, television programming information may be searched for the search string. The television programming information may be stored locally by the television tuner device that is executing the EPG. As such, the search may be conducted locally and may not require any communication with a remote server, such as a programming information server or an electronic programming guide server. Performing the search may involve the television programming information, including the titles of television programs, the description of television programs, and/or a listing of cast and/or crew being searched for the search string received at step 730. In some embodiments, the end-user may be able to limit the search performed at step 730. For example, the end-user may limit the search to only television programming information relevant to the current day, or to television programming information related to currently playing television programs. Other forms of restriction of the search may be available to the end-user. As discussed in relation to method 600 of FIG. 6, a search may involve accessing a remote server, such as an electronic programming guide server, to obtain search results.

Returning to method 700 of FIG. 7, at step 750, search results may be identified. These search results may be identified by the television tuner device that is executing the EPG. Identifying the search results may involve identifying zero, one, or more than one search results that are in some way related to the search string received at step 730. If no search results are identified, method 700 may end. If one or more search results are identified, method 700 may proceed to step 760.

At step 760, a colour may be selected for each search result based on the selections of colour received at step 720. The colour selected for each search result may be based on the relationship between the search string and the corresponding search result and colour input received at step 720. Each type of relationship may be associated with a different colour.

At step 770, some or all of the search results identified at step 750 may be displayed to the end-user. Step 770 may include outputting the search results for display to a display device. Each of these search results may be accented by a particular colour that was selected for the search result at step 760. In some embodiments, accenting each search result with a particular colour involves highlighting the search results with the particular colour, such as in FIG. 3. In such embodiments, only television programs and/or other content that has a relationship with the search string are presented to the end-user. In other embodiments, such as in the EPG of FIG. 4, these search results may be accented with a particular colour among television programs that do not have a relationship with the search string provided by the end-user. Presentation of the search results using the accent colours may occur via an end-user display device, such as a television. Referring to system 100 of FIG. 1, end-user display device 180 may be used to display the search results produced by EPG 172 being executed by television tuner device 170. Following these search results being displayed with the accented colours at step 770, the end-user may be permitted to view television programming information related to the search results and/or view the television programming associated with the search results.

At step 770, in addition, presenting these search results accented with the selected colours to the end-user may involve grouping these search results according to the relationships used to select colours at step 760. As such, each search result that has the same relationship with the search string may be grouped together and displayed together to the end-user. Further, based on the relationship between the search results in the search string, ordering in which the search results are to be presented to the end-user may be determined. For example, if a search string is present in the title of a search result, such a search result may be listed ahead of recommended television programs based on the search string.

While the above methods focus on the use of colour to accent search results, it should be understood that similar methods may be used to accent search results to an end-user by a television tuner device on an end-user display using techniques other than colour. For example, multiple lists of search results may be presented with each list representing a different relationship between the search string and the result. Based on the relationship between the search result and a search string, these search result lists may be presented in a particular area of the end-user display.

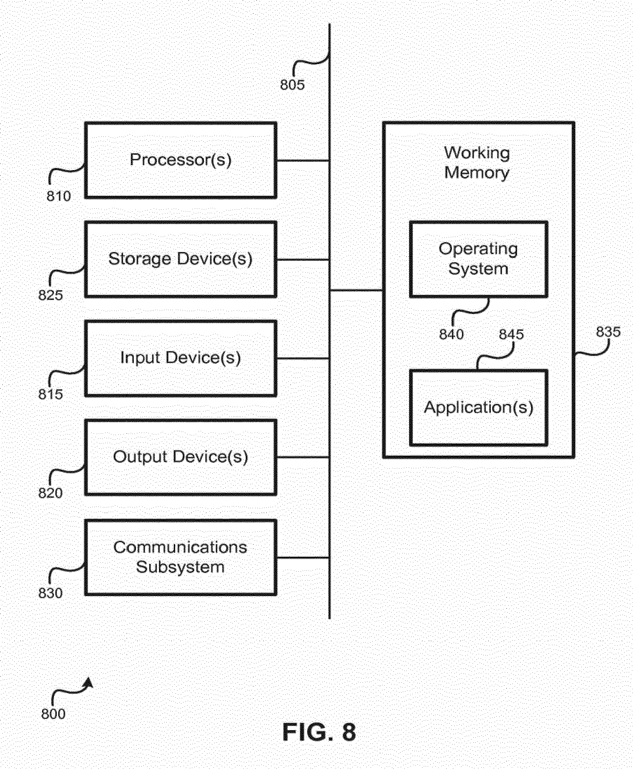

FIG. 8 illustrates an embodiment of a computer system. A computer system as illustrated in FIG. 8 may be incorporated as part of the previously described computerized devices. For example, computer system 800 can represent some of the components of the television tuner devices, programming information server, the television programming services system, and/or the electronic programming guide server. FIG. 8 provides a schematic illustration of one embodiment of a computer system 800 that can perform the methods provided by various embodiments. It should be noted that FIG. 8 is meant only to provide a generalized illustration of various components, any or all of which may be utilized as appropriate. FIG. 8, therefore, broadly illustrates how individual system elements may be implemented in a relatively separated or relatively more integrated manner.

The computer system 800 is shown comprising hardware elements that can be electrically coupled via a bus 805 (or may otherwise be in communication, as appropriate). The hardware elements may include one or more processors 810, including without limitation one or more general-purpose processors and/or one or more special-purpose processors (such as digital signal processing chips, graphics acceleration processors, and/or the like); one or more input devices 815, which can include without limitation a mouse, a keyboard, and/or the like; and one or more output devices 820, which can include without limitation a display device, a printer, and/or the like.

The computer system 800 may further include (and/or be in communication with) one or more non-transitory storage devices 825, which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable, and/or the like. Such storage devices may be configured to implement any appropriate data stores, including without limitation, various file systems, database structures, and/or the like.

The computer system 800 might also include a communications subsystem 830, which can include without limitation a modem, a network card (wireless or wired), an infrared communication device, a wireless communication device and/or chipset (such as a Bluetooth™ device, an 802.11 device, a WiFi device, a WiMax device, cellular communication facilities, etc.), and/or the like. The communications subsystem 830 may permit data to be exchanged with a network (such as the network described below, to name one example), other computer systems, and/or any other devices described herein. In many embodiments, the computer system 800 will further comprise a working memory 835, which can include a RAM or ROM device, as described above.

The computer system 800 also can comprise software elements, shown as being currently located within the working memory 835, including an operating system 840, device drivers, executable libraries, and/or other code, such as one or more application programs 845, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a non-transitory computer-readable storage medium, such as the storage device(s) 825 described above. In some cases, the storage medium might be incorporated within a computer system, such as computer system 800. In other embodiments, the storage medium might be separate from a computer system (e.g., a removable medium, such as a compact disc), and/or provided in an installation package, such that the storage medium can be used to program, configure, and/or adapt a general purpose computer with the instructions/code stored thereon. These instructions might take the form of executable code, which is executable by the computer system 800 and/or might take the form of source and/or installable code, which, upon compilation and/or installation on the computer system 800 (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices, such as network input/output devices, may be employed.

As mentioned above, in one aspect, some embodiments may employ a computer system (such as the computer system 800) to perform methods in accordance with various embodiments of the invention. According to a set of embodiments, some or all of the procedures of such methods are performed by the computer system 800 in response to processor 810 executing one or more sequences of one or more instructions (which might be incorporated into the operating system 840 and/or other code, such as an application program 845) contained in the working memory 835. Such instructions may be read into the working memory 835 from another computer-readable medium, such as one or more of the storage device(s) 825. Merely by way of example, execution of the sequences of instructions contained in the working memory 835 might cause the processor(s) 810 to perform one or more procedures of the methods described herein.

The terms "machine-readable medium" and "computer-readable medium," as used herein, refer to any non-transitory medium that participates in providing data that causes a machine to operate in a specific fashion. In an embodiment implemented using the computer system 800, various computer-readable media might be involved in providing instructions/code to processor(s) 810 for execution and/or might be used to store and/or carry such instructions/code. In many implementations, a computer-readable medium is a non-transitory physical and/or tangible storage medium. Such a non-transitory medium may take the form of a non-volatile media or volatile media. Non-volatile media include, for example, optical and/or magnetic disks, such as the storage device(s) 825. Volatile media include, without limitation, dynamic memory, such as the working memory 835.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 810 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 800.

The communications subsystem 830 (and/or components thereof) generally will receive signals, and the bus 805 then might carry the signals (and/or the data, instructions, etc. carried by the signals) to the working memory 835, from which the processor(s) 810 retrieves and executes the instructions. The instructions received by the working memory 835 may optionally be stored on a storage device 825 either before or after execution by the processor(s) 810.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques.

Also, configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

## Claims

1. A method for organizing search results within an electronic programming guide (EPG) of a television programming device, the method comprising:
receiving (630), by the television programming device, a search string, wherein the search string comprises information related to television programming;
searching (640), by the television programming device, a set of television programming information stored by a storage device local to the television programming device using the search string, the set of television programming information being received (610) prior to receiving the search string and comprising information related to multiple television channels, multiple times, and multiple television programs;
identifying, by the television programming device, a first search result and a second search result, wherein each of the first search result and the second search result comprises a television channel, a time, and a television program;
selecting (685), by the television programming device, a first colour at least partially based on a first relationship between the search string and the first search result;
selecting (685), by the television programming device, a second colour at least partially based on a second relationship between the search string and the second search result, wherein the second relationship is different from the first relationship; and
outputting (690) by the television programming device, via an EPG display, the first search result displayed with the first colour and the second search result displayed with the second colour;
wherein the EPG display displays channel names and television programming information for multiple channels over a period of time, and wherein a user has the ability to scroll to display television programming scheduled to be shown earlier or later;
**characterised in that**:
the first search result is based on a search of a first programming information field and the second search result is based on a search of a second programming information field;
the method further comprising:
determining (650), at least partially based on the search string, to conduct a search external to the set of television programming information;
transmitting (660), by the television programming device, the search string to a remote server; and
receiving (680), by the television programming device, search results from the remote server, wherein:
the search results from the remote server are based on a search of additional programming information fields not present in the set of television programming information received at the television programming device; and
at least one of the first search result and the second search result is from the search results from the remote server; and
highlighting the names of television channels that contain a search result related to the search string using the same colour as the most significant corresponding search result for the television channel.

2. The method of claim 1, wherein:
receiving, by the television programming device, the set of television programming information occurs via a first communication channel; and
receiving, by the television programming device, search results from the remote server occurs via a second communication channel different from the first communication channel.

3. The method of any preceding claim, wherein:
outputting the first search result for display with the first colour comprises using the first colour to highlight the first search result; and
outputting the second search result for display with the second colour comprises using the second colour to highlight the second search result.

4. The method of any preceding claim, further comprising:
prior to receiving the search string, receiving, by the television programming device, input linking the first colour to the first relationship; and
prior to receiving the search string, receiving, by the television programming device, input linking the second colour to the second relationship.

5. The method of claim 4, wherein the input is received from a user of the television programming device or wherein the input is received from a remote server.

6. A computer program comprising instructions to cause the television programming device of claim 9 to execute the steps of:
receive a search string, wherein the search string comprises information related to television programming;
search a set of television programming information stored by a local storage device using the search string;
identify a first search result and a second search result, wherein each of the first search result and the second search result comprises a television channel, a time, and a television program;
select a first colour at least partially based on a first relationship between the search string and the first search result;
select a second colour at least partially based on a second relationship between the search string and the second search result, wherein the second relationship is different from the first relationship;
output, for display, the first search result with the first colour and the second search result displayed with the second colour within an electronic programming guide (EPG);
wherein the EPG display displays channel names and television programming information for multiple channels over a period of time, and wherein a user has the ability to scroll to display television programming scheduled to be shown earlier or later;
prior to receiving the search string, receive the set of television programming information, wherein the set of television programming information comprises information related to multiple television channels, multiple times, and multiple television programs;
prior to receiving the search string, locally store the set of television programming information using the local storage device;
**characterised in that**:
the first search result is based on a search of a first programming information field and the second search result is based on a search of a second programming information field; and
the computer program further comprises instructions configured to cause the computer to:
determine, at least partially based on the search string, to conduct a search external to the set of television programming information;
transmit the search string to a remote server; and
receive search results from the remote server, wherein:
the search results from the remote server are based on a search of information fields not present in the set of television programming information; and
at least one of the first search result and the second search result is from the search results from the remote server; and
highlight the names of television channels that contain a search result related to the search string using the same colour as a corresponding search result for the television channel.

7. The computer program of claim 6, wherein the instructions are configured to cause the computer to:
receive the set of television programming information that comprises instructions to receive the set of television programming information via a first communication channel; and
receive the search results from the remote server that comprise instructions to receive the search results via a second communication channel different from the first communication channel.

8. The computer program of any of claims 6 or 7, further comprising instructions configured to cause the computer to:
prior to receiving the search string, receive input linking the first colour to the first relationship; and
prior to receiving the search string, receive input linking the second colour to the second relationship.

9. A television programming device (800) configured to organize search results within an electronic programming guide, the television programming device comprising:
a processor (810); and
a storage device (825), the storage device configured to store instructions configured to cause the processor to:
cause a search string to be received, wherein the search string comprises information related to television programming;
search a set of television programming information stored by a local storage device using the search string;
identify a first search result and a second search result, wherein each of the first search result and the second search result comprises a television channel, a time, and a television program;
select a first colour at least partially based on a first relationship between the search string and the first search result;
select a second colour at least partially based on a second relationship between the search string and the second search result, wherein the second relationship is different from the first relationship; and
generate for display the first search result using the first colour and the second search result using the second colour within the electronic programming guide (EPG);
wherein the EPG display displays channel names and television programming information for multiple channels over a period of time, and wherein a user has the ability to scroll to display television programming scheduled to be shown earlier or later; and
wherein the instructions further comprise instructions configured to cause to the processor to undertake the methods of any of claims 1 to 5, or wherein the instructions further comprise the instructions of the computer program of any of claims 6 to 8.

10. The method of any of claims 1 to 5, the computer program of any of claims 6 to 8, or the television programming device configured to organize the search results within the electronic programming guide of claim 9, wherein:
the first relationship is that the search string is present in a title of the first search result; and
the second relationship is that the search string is present in a description of the second search result.

## Patentansprüche

1. Verfahren zum Ordnen von Suchergebnissen in einem elektronischen Programmführer (Electronic Programming Guide - EPG) einer Fernsehprogrammgestaltungsvorrichtung, wobei das Verfahren Folgendes aufweist:
Empfangen (630) durch die Fernsehprogrammgestaltungsvorrichtung eines Suchbegriffs, wobei der Suchbegriff Informationen in Bezug auf Fernsehprogrammgestaltung umfasst;
Suchen (640), durch die Fernsehprogrammgestaltungsvorrichtung, in einem Fernsehprogramminformationssatz, der von einer zur Fernsehprogrammgestaltungsvorrichtung lokalen Speichervorrichtung gespeichert wird, unter Verwendung des Suchbegriffs, wobei der Fernsehprogramminformationssatz vor dem Empfang des Suchbegriffs empfangen (610) wird und Informationen in Bezug auf mehrere Fernsehkanäle, mehrere Zeiten und mehrere Fernsehsendungen umfasst;
Identifizieren eines ersten Suchergebnisses und eines zweiten Suchergebnisses durch die Fernsehprogrammgestaltungsvorrichtung, wobei das erste Suchergebnis und das zweite Suchergebnis jeweils einen Fernsehkanal, eine Zeit und eine Fernsehsendung umfassen;
Auswählen (685) einer ersten Farbe durch die Fernsehprogrammgestaltungsvorrichtung wenigstens teilweise auf Basis einer ersten Beziehung zwischen dem Suchbegriff und dem ersten Suchergebnis;
Auswählen (685) einer zweiten Farbe durch die Fernsehprogrammgestaltungsvorrichtung wenigstens teilweise auf Basis einer zweiten Beziehung zwischen dem Suchbegriff und dem zweiten Suchergebnis, wobei die zweite Beziehung von der ersten Beziehung verschieden ist; und
Ausgeben (690) durch die Fernsehprogrammgestaltungsvorrichtung des mit der ersten Farbe angezeigten ersten Suchergebnisses und des mit der zweiten Farbe angezeigten zweiten Suchergebnisses über eine EPG-Anzeige;
wobei die EPG-Anzeige Kanalnamen und Fernsehprogramminformationen für mehrere Kanäle über einen Zeitraum anzeigt und wobei ein Benutzer scrollen kann, um eine früher oder später zu zeigende Fernsehprogrammgestaltung anzuzeigen,
**dadurch gekennzeichnet, dass**:
das erste Suchergebnis auf einer Suche in einem ersten Programminformationsfeld basiert und das zweite Suchergebnis auf einer Suche in einem zweiten Programminformationsfeld basiert;
wobei das Verfahren ferner Folgendes umfasst:
Bestimmen (650), wenigstens teilweise auf Basis des Suchbegriffs, eine Suche außerhalb des Fernsehprogramminformationssatzes durchzuführen;
Übertragen (660) des Suchbegriffs durch die Fernsehprogrammgestaltungsvorrichtung an einen fernen Server; und
Empfangen (680) von Suchergebnissen aus dem fernen Server durch die Fernsehprogrammgestaltungsvorrichtung, wobei
die Suchergebnisse aus dem fernen Server auf einer Suche in zusätzlichen Programminformationsfeldern basieren, die im an der Fernsehprogrammgestaltungsvorrichtung empfangenen Fernsehprogramminformationssatz nicht vorhanden sind; und
das erste Suchergebnis und/oder das zweite Suchergebnis aus den Suchergebnissen aus dem fernen Server ist; und
Markieren der Namen von Fernsehkanälen, die ein Suchergebnis in Bezug auf den Suchbegriff enthalten, unter Verwendung der gleichen Farbe wie das bedeutendste entsprechende Suchergebnis für den Fernsehkanal.

2. Verfahren nach Anspruch 1, wobei:
das Empfangen des Fernsehprogramminformationssatzes durch die Fernsehprogrammgestaltungsvorrichtung über einen ersten Kommunikationskanal erfolgt; und
das Empfangen von Suchergebnissen aus dem fernen Server durch die Fernsehprogrammgestaltungsvorrichtung über einen zweiten Kommunikationskanal erfolgt, der von dem ersten Kommunikationskanal verschieden ist.

3. Verfahren nach einem der vorhergehenden Ansprüche, wobei:
das Ausgeben des ersten Suchergebnisses zur Anzeige mit der ersten Farbe das Verwenden der ersten Farbe zum Markieren des ersten Suchergebnisses umfasst; und
das Ausgeben des zweiten Suchergebnisses zur Anzeige mit der zweiten Farbe das Verwenden der zweiten Farbe zum Markieren des zweiten Suchergebnisses umfasst.

4. Verfahren nach einem der vorhergehenden Ansprüche, das ferner Folgendes umfasst:
vor Empfangen des Suchbegriffs Empfangen, durch die Fernsehprogrammgestaltungsvorrichtung, einer Eingabe, die die erste Farbe mit der ersten Beziehung verknüpft; und
vor Empfangen des Suchbegriffs Empfangen, durch die Fernsehprogrammgestaltungsvorrichtung, einer Eingabe, die die zweite Farbe mit der zweiten Beziehung verknüpft.

5. Verfahren nach Anspruch 4, wobei die Eingabe von einem Benutzer der Fernsehprogrammgestaltungsvorrichtung empfangen wird oder wobei die Eingabe von einem fernen Server empfangen wird.

6. Computerprogramm, das Anweisungen zum Veranlassen der Fernsehprogrammvorrichtung nach Anspruch 9 zum Ausführen der folgenden Schritte umfasst:
Empfangen eines Suchbegriffs, wobei der Suchbegriff Informationen in Bezug auf Fernsehprogrammgestaltung umfasst;
Suchen in einem Fernsehprogramminformationssatz, der von einer lokalen Speichervorrichtung gespeichert wird, unter Verwendung des Suchbegriffs,
Identifizieren eines ersten Suchergebnisses und eines zweiten Suchergebnisses, wobei das erste Suchergebnis und das zweite Suchergebnis jeweils einen Fernsehkanal, eine Zeit und eine Fernsehsendung umfassen;
Auswählen einer ersten Farbe wenigstens teilweise auf Basis einer ersten Beziehung zwischen dem Suchbegriff und dem ersten Suchergebnis;
Auswählen einer zweiten Farbe wenigstens teilweise auf Basis einer zweiten Beziehung zwischen dem Suchbegriff und dem zweiten Suchergebnis, wobei die zweite Beziehung von der ersten Beziehung verschieden ist;
Ausgeben, zur Anzeige, des ersten Suchergebnisses mit der ersten Farbe und des mit der zweiten Farbe angezeigten zweiten Suchergebnisses in einem elektronischen Programmführer (Electronic Programming Guide - EPG);
wobei die EPG-Anzeige Kanalnamen und Fernsehprogramminformationen für mehrere Kanäle über einen Zeitraum anzeigt und wobei ein Benutzer scrollen kann, um eine früher oder später zu zeigende Fernsehprogrammgestaltung anzuzeigen;
vor Empfangen des Suchbegriffs Empfangen des Fernsehprogramminformationssatzes, wobei der Fernsehprogramminformationssatz Informationen in Bezug auf mehrere Fernsehkanäle, mehrere Zeiten und mehrere Fernsehsendungen umfasst;
vor Empfangen des Suchbegriffs lokales Speichern des Fernsehprogramminformationssatzes unter Verwendung der lokalen Speichervorrichtung;
**dadurch gekennzeichnet, dass**:
das erste Suchergebnis auf einer Suche in einem ersten Programminformationsfeld basiert und das zweite Suchergebnis auf einer Suche in einem zweiten Programminformationsfeld basiert; und
das Computerprogramm ferner Anweisungen umfasst, die zum Veranlassen des Computers zu Folgendem gestaltet sind:
Bestimmen, wenigstens teilweise auf Basis des Suchbegriffs, eine Suche außerhalb des Fernsehprogramminformationssatzes durchzuführen;
Übertragen des Suchbegriffs an einen fernen Server; und
Empfangen von Suchergebnissen vom fernen Server, wobei:
die Suchergebnisse aus dem fernen Server auf einer Suche in Programminformationsfeldern basieren, die im Fernsehprogramminformationssatz nicht vorhanden sind; und
das erste Suchergebnis und/oder das zweite Suchergebnis aus den Suchergebnissen aus dem fernen Server ist; und
Markieren der Namen von Fernsehkanälen, die ein Suchergebnis in Bezug auf den Suchbegriff enthalten, unter Verwendung der gleichen Farbe wie ein entsprechendes Suchergebnis für den Fernsehkanal.

7. Computerprogramm nach Anspruch 6, wobei die Anweisungen zum Veranlassen des Computers zu Folgendem gestaltet sind:
Empfangen des Fernsehprogramminformationssatzes, der Anweisungen zum Empfangen des Fernsehprogramminformationssatzes über einen ersten Kommunikationskanal umfasst; und
Empfangen der Suchergebnisse aus dem fernen Server, die Anweisungen zum Empfangen der Suchergebnisse über einen zweiten Kommunikationskanal umfassen, der von dem ersten Kommunikationskanal verschieden ist.

8. Computerprogramm nach einem der Ansprüche 6 oder 7, das ferner Anweisungen umfasst, die zum Veranlassen des Computers zu Folgendem gestaltet sind:
vor Empfangen des Suchbegriffs Empfangen einer Eingabe, die die erste Farbe mit der ersten Beziehung verknüpft; und
vor Empfangen des Suchbegriffs Empfangen einer Eingabe, die die zweite Farbe mit der zweiten Beziehung verknüpft.

9. Fernsehprogrammgestaltungsvorrichtung (800), die zum Ordnen von Suchergebnissen in einem elektronischen Programmführer konfiguriert ist, wobei die Fernsehprogrammgestaltungsvorrichtung Folgendes umfasst:
einen Prozessor (810); und
eine Speichervorrichtung (825), wobei die Speichervorrichtung zum Speichern von Anweisungen konfiguriert ist, die zum Veranlassen des Prozessors zu Folgendem gestaltet sind:
Veranlassen des Empfangens eines Suchbegriffs, wobei der Suchbegriff Informationen in Bezug auf Fernsehprogrammgestaltung umfasst;
Suchen in einem Fernsehprogramminformationssatz, der von einer lokalen Speichervorrichtung gespeichert wird, unter Verwendung des Suchbegriffs,
Identifizieren eines ersten Suchergebnisses und eines zweiten Suchergebnisses, wobei das erste Suchergebnis und das zweite Suchergebnis jeweils einen Fernsehkanal, eine Zeit und eine Fernsehsendung umfassen;
Auswählen einer ersten Farbe wenigstens teilweise auf Basis einer ersten Beziehung zwischen dem Suchbegriff und dem ersten Suchergebnis;
Auswählen einer zweiten Farbe wenigstens teilweise auf Basis einer zweiten Beziehung zwischen dem Suchbegriff und dem zweiten Suchergebnis, wobei die zweite Beziehung von der ersten Beziehung verschieden ist; und
Generieren, zur Anzeige, des ersten Suchergebnisses unter Verwendung der ersten Farbe und des zweiten Suchergebnisses unter Verwendung der zweiten Farbe in einem elektronischen Programmführer (Electronic Programming Guide - EPG);
wobei die EPG-Anzeige Kanalnamen und Fernsehprogramminformationen für mehrere Kanäle über einen Zeitraum anzeigt und wobei ein Benutzer scrollen kann, um eine früher oder später zu zeigende Fernsehprogrammgestaltung anzuzeigen; und
wobei die Anweisungen ferner Anweisungen umfassen, die zum Veranlassen des Prozessors zum Durchführen der Verfahren nach einem der Ansprüche 1 bis 5 gestaltet sind, oder wobei die Anweisungen ferner die Anweisungen des Computerprogramms nach einem der Ansprüche 6 bis 8 umfassen.

10. Verfahren nach einem der Ansprüche 1 bis 5, Computerprogramm nach einem der Ansprüche 6 bis 8 oder Fernsehprogrammgestaltungsvorrichtung, das bzw. die zum Ordnen der Suchergebnisse im elektronischen Programmführer nach Anspruch 9 gestaltet ist bzw. sind, wobei:
die erste Beziehung die ist, dass der Suchbegriff in einem Titel des ersten Suchergebnisses vorhanden ist; und
die zweite Beziehung die ist, dass der Suchbegriff in einer Beschreibung des zweiten Suchergebnisses vorhanden ist.

## Revendications

1. Procédé permettant d'organiser des résultats de recherche dans un guide électronique de programmes (EPG) dans un dispositif de programmes de télévision, le procédé comprenant :
recevoir (630), par le dispositif de programmes de télévision, une chaîne de recherche, où la chaîne de recherche comprend des informations associées à des programmes de télévision ;
rechercher (640), par le dispositif de programmes de télévision, un ensemble d'informations de programmes de télévision stocké par un dispositif de stockage local au dispositif de programmes de télévision en utilisant la chaîne de recherche, l'ensemble d'informations de programmes de télévision étant reçu (610) avant de recevoir la chaîne de recherche et comprenant des informations associées à des chaînes de télévision multiples, à des heures multiples et à des programmes de télévision multiples ;
identifier, par le dispositif de programmes de télévision, un premier résultat de recherche et un deuxième résultat de recherche, où chacun du premier résultat de recherche et du deuxième résultat de recherche comprend une chaîne de télévision, une heure et un programme de télévision ;
sélectionner (685), par le dispositif de programmes de télévision, une première couleur partiellement au moins sur la base d'une première relation entre la chaîne de recherche et le premier résultat de recherche ;
sélectionner (685), par le dispositif de programmes de télévision, une deuxième couleur partiellement au moins sur la base d'une deuxième relation entre la chaîne de recherche et le deuxième résultat de recherche, où la deuxième relation est différente de la première relation ; et
sortir (690), par le dispositif de programmes de télévision, par un affichage EPG, le premier résultat de recherche affiché avec la première couleur et le deuxième résultat de recherche affiché avec la deuxième couleur'
dans lequel l'affichage EPG affiche des noms de chaînes et des informations de programmes de télévision pour des chaînes multiples pendant une période de temps, et où un utilisateur a la possibilité de faire défiler pour afficher des programmes de télévision planifiés pour être présentés plus tôt ou plus tard ;
**caractérisé en ce que** :
le premier résultat de recherche est basé sur une recherche d'un premier champ d'informations de programmes et le deuxième résultat de recherche est basé sur une recherche d'un deuxième champ d'informations de programmes ;
le procédé comprenant en outre :
déterminer (650), partiellement au moins sur la base de la chaîne de recherche, d'effectuer une recherche externe à l'ensemble d'informations de programmes de télévision ;
transmettre (660), par le dispositif de programmes de télévision, la chaîne de recherche à un serveur à distance ; et
recevoir (680), par le dispositif de programmes de télévision, des résultats de recherche provenant du serveur à distance, où :
les résultats de recherche du serveur à distance sont basés sur une recherche de champs d'informations de programme supplémentaires non présents dans l'ensemble d'informations de programmes de télévision reçu au dispositif de programmes de télévision ; et
au moins l'un d'entre le premier résultat de recherche et le deuxième résultat de recherche provient des résultats de recherche provenant du serveur à distance ; et
surligner les noms des chaînes de télévision qui contiennent un résultat de recherche associé à la chaîne de recherche en utilisant la même couleur comme le résultat de recherche correspondant le plus significatif pour la chaîne de télévision.

2. Procédé selon la revendication 1, dans lequel :
le fait de recevoir, par le dispositif de programmes de télévision, l'ensemble d'informations de programmes de télévision survient par un premier canal de communication ; et
le fait de recevoir, par le dispositif de programmes de télévision, des résultats de recherche provenant du serveur à distance survient par un deuxième canal de communication différent du premier canal de communication.

3. Procédé selon l'une quelconque des revendications précédentes, dans lequel :
sortir le premier résultat de recherche pour affichage avec la première couleur comprend utiliser la première couleur pour surligner le premier résultat de recherche ; et
sortir le deuxième résultat de recherche pour affichage avec la deuxième couleur comprend utiliser la deuxième couleur pour surligner le deuxième résultat de recherche.

4. Procédé selon l'une quelconque des revendications précédentes, comprenant en outre :
avant de recevoir la chaîne de recherche, recevoir, par le dispositif de programmes de télévision, une entrée reliant la première couleur à la première relation ; et
avant de recevoir la chaîne de recherche, recevoir, par le dispositif de programmes de télévision, une entrée reliant la deuxième couleur à la deuxième relation.

5. Procédé selon la revendication 4, dans lequel l'entrée est reçue d'un utilisateur du dispositif de programmes de télévision ou bien dans lequel l'entrée est reçue d'un serveur à distance.

6. Programme informatique comprenant des instructions pour faire qu'un dispositif de programmes de télévision selon la revendication 9, exécute les étapes consistant à :
recevoir une chaîne de recherche, où la chaîne de recherche comprend des informations associées à des programmes de télévision ;
rechercher un ensemble d'informations de programmes de télévision stocké par un dispositif de stockage local en utilisant la chaîne de recherche ;
identifier un premier résultat de recherche et un deuxième résultat de recherche, où chacun du premier résultat de recherche et du deuxième résultat de recherche comprend une chaîne de télévision, une heure et un programme de télévision ;
sélectionner une première couleur partiellement au moins sur la base d'une première relation entre la chaîne de recherche et le premier résultat de recherche ;
sélectionner une deuxième couleur partiellement au moins sur la base d'une deuxième relation entre la chaîne de recherche et le deuxième résultat de recherche, où la deuxième relation est différente de la première relation ;
sortir, pour affichage, le premier résultat de recherche avec la première couleur et le deuxième résultat de recherche avec la deuxième couleur dans un guide électronique de programmes (EPG) ;
dans lequel l'affichage EPG affiche des noms de chaînes et des informations de programmes de télévision pour des chaînes multiples pendant une période de temps, et où un utilisateur a la possibilité de faire défiler pour afficher des programmes de télévision planifiés pour être présentés plus tôt ou plus tard ;
avant de recevoir la chaîne de recherche, recevoir l'ensemble d'informations de programmes de télévision, où l'ensemble d'informations de programmes de télévision comprend des informations associées à des chaînes de télévision multiples, à des heures multiples et à des programmes de télévision multiples ;
avant de recevoir la chaîne de recherche, stocker localement l'ensemble d'informations de programmes de télévision en utilisant le dispositif de stockage local ;
**caractérisé en ce que** :
le premier résultat de recherche est basé sur une recherche d'un premier champ d'informations de programmes et le deuxième résultat de recherche est basé sur une recherche d'un deuxième champ d'informations de programme ; et
le programme informatique comprend en outre des instructions configurées pour faire que l'ordinateur :
détermine, partiellement au moins sur la base de la chaîne de recherche, d'effectuer une recherche externe à l'ensemble d'informations de programmes de télévision ;
transmette la chaîne de recherche au serveur à distance ; et
reçoive des résultats de recherche du serveur à distance, où :
les résultats de recherche provenant du serveur à distance sont basés sur une recherche de champs d'informations non présents dans l'ensemble d'informations de programmes de télévision ; et
au moins l'un d'entre le premier résultat de recherche et le deuxième résultat de recherche provient des résultats de recherche provenant du serveur à distance ; et
surligner les noms des chaînes de télévision qui contiennent un résultat de recherche associé à la chaîne de recherche en utilisant la même couleur comme un résultat de recherche correspondant pour la chaîne de télévision.

7. Programme informatique selon la revendication 6, dans lequel les instructions sont configurées pour faire que l'ordinateur :
reçoive l'ensemble d'informations de programmes de télévision qui comprend des instructions pour recevoir l'ensemble d'informations de programmes de télévision par un premier canal de communication ; et
reçoive les résultats de recherche du serveur à distance qui comprennent des instructions pour recevoir les résultats de recherche par un deuxième canal de communication différent du premier canal de communication.

8. Programme informatique selon l'une quelconque des revendications 6 ou 7, comprenant en outre des instructions configurées pour faire que l'ordinateur :
avant de recevoir la chaîne de recherche, reçoive une entrée reliant la première couleur à la première relation ; et
avant de recevoir la chaîne de recherche, reçoive une entrée reliant la deuxième couleur à la deuxième relation.

9. Dispositif de programmes de télévision (800) configuré pour organiser des résultats de recherche dans un guide électronique de programmes, le dispositif de programmes de télévision comprenant :
un processeur (810) ; et
un dispositif de stockage (825), le dispositif de stockage étant configuré pour stocker des instructions configurées pour faire que le processeur :
cause la réception d'une chaîne de recherche, où la chaîne de recherche comprend des informations associées à des programmes de télévision ;
recherche un ensemble d'informations de programmes de télévision stocké par un dispositif de stockage local en utilisant la chaîne de recherche ;
identifie un premier résultat de recherche et un deuxième résultat de recherche, ou chacun du premier résultat de recherche et du deuxième résultat de recherche comprend une chaîne de télévision, une heure et un programme de télévision ;
sélectionne une première couleur partiellement au moins sur la base d'une première relation entre la chaîne de recherche et le premier résultat de recherche ;
sélectionne une deuxième couleur partiellement au moins sur la base d'une deuxième relation entre la chaîne de recherche et le deuxième résultat de recherche, où la deuxième relation est différente de la première relation ; et
génère pour affichage le premier résultat de recherche en utilisant la première couleur et le deuxième résultat de recherche en utilisant la deuxième couleur dans le guide électronique de programmes (EPG) ;
dans lequel l'affichage EPG affiche des noms de chaînes et des informations de programmes de télévision pour des chaînes multiples pendant une période de temps, et où un utilisateur a la possibilité de faire défiler pour afficher des programmes de télévision planifiés pour être présentés plus tôt ou plus tard ; et
dans lequel les instructions comprennent en outre des instructions configurées pour faire que le processeur exécute les procédés selon l'une quelconque des revendications 1 à 5, ou bien dans lequel les instructions comprennent en outre les instructions du programme informatique selon l'une quelconque des revendications 6 à 8.

10. Procédé selon l'une quelconque des revendications 1 à 5, programme informatique selon l'une quelconque des revendications 6 à 8 ou dispositif de programmes de télévision configuré pour organiser les résultats de recherche dans le guide électronique de programmes selon la revendication 9, où :
la première relation est que la chaîne de recherche est présente dans un titre du premier résultat de recherche ; et
la deuxième relation est que la chaîne de recherche est présente dans une description du deuxième résultat de recherche.
